# EUROPÄISCHE PATENTSCHRIFT

(11) **EP 1 630 100 B1**
(45) Veröffentlichungstag und Bekanntmachung des Hinweises auf die Patenterteilung: **23.01.2008**
(21) Anmeldenummer: 04027842.6
(22) Anmeldetag: 24.11.2004
(51) Int. Cl.: B64F 1/28, B67D 5/01, F16L 27/08

(54) **Kopfstück für Betankungssysteme**
Head assembly for refuelling systems
Tête de ligne pour dispositif de ravitaillement en carburant

(30) Priorität: 13.07.2004 EP 04016427
(43) Veröffentlichungstag der Anmeldung: 01.03.2006
(73) Patentinhaber: von Meyerinck, Wolfgang, Dipl.-Ing., D-35457 Lollar (DE)
(72) Erfinder: von Meyerinck, Wolfgang, Dipl.-Ing., D-35457 Lollar (DE)
(74) Vertreter: von den Steinen, Axel

(56) Entgegenhaltungen:
- EP-A- 0 166 800
- EP-A- 0 394 543
- DE-A- 3 523 472
- US-A- 3 651 832
- US-A- 3 891 004
- US-A- 4 658 874
- US-A- 4 993 463

## Beschreibung

Die Erfindung betrifft ein Kopfstück für bewegliche oder ortsfeste Betankungssysteme mit einer Betankungskupplung für den Anschluss an einen Tank, wobei für den Durchfluss des Treibstoffs mehrere starre Rohrabschnitte vorgesehen sind. Derartige Kopfstücke finden beispielsweise als Betankungsarm oder Verladearm in Industrieanlagen insbesondere der chemischen Industrie Verwendung. Ein weiteres Einsatzgebiet solcher Kopfstücke sind Betankungssysteme an Flughäfen, insbesondere zur Betankung von militärischen Fluggeräten.

Bei der Verladung von Treibstoff und anderer flüssiger chemischer Medien in Tankwagen, Eisenbahnkesselwagen, nicht ortsfeste Behälter oder Fluggeräte müssen große Mengen des Mediums in kürzester Zeit von einem ortsfesten oder transportablen Behältersystem, Tanklager oder Übergabestation in den zu befüllenden Tank umgeschlagen werden. Dazu sind beispielsweise Verlade- oder Entladearme bekannt, die ortsfest mit einer mediumleitenden Rohrleitung verbunden sind.

Beispielsweise bei der Betankung von militärischen oder zivilen Flugzeugen, müssen große Treibstoffmengen in kürzester Zeit von einem ortsfesten Kraftstoffsystem, Tanklager oder Hydrantensystem über bewegliche, nicht ortsfeste Schlauchwagen oder über verstellbare Betankungsarme in den zu befüllenden Tank umgeschlagen werden. Dazu sind ortsfeste scherenförmige Betankungsarme, die ortsfest mit einer mediumleitenden Rohrleitung verbunden sind, oder verfahrbare Betankungsarme bekannt. Außerdem sind gattungsgemäße Kopfstücke auch an Tankwagen denkbar, wie sie beispielsweise zur Flugzeugbetankung eingesetzt werden.

Aus dem Stand der Technik sind Schläuche bekannt, die an ihrem vorderen Ende mit einer Betankungskupplung versehen sind, so dass der Betankungsvorgang unmittelbar nach dem Ankuppeln an die Füllöffnung des zu befüllenden Tanks erfolgen kann.

Aus der EP 01 66 800 EI ist z.B. ein Kopfstück für bewegliche oder ortsfeste Betankungssysteme bekannt, mit einer Betankungskupplung für den Anschluss an den zu füllenden bzw. zu entleerenden Tank, wobei das Kopfstück aus einer aus sechs Rohrstücken gebildeten Rohrleitung besteht, die durch sechs Drehgelenke mit jeweils einem Freiheitsgrad miteinander verbunden sind.

Nachteilig an den aus diesem Stand der Technik bekannten Betankungssystemen ist jedoch, dass die bekannten Betankungssysteme erheblichen Handhabungsschwierigkeiten unterliegen. So stellen Schläuche wegen ihrer Anfälligkeit und Hitzeempfindlichkeit ein hohes Sicherheitsrisiko dar, insbesondere bei Verwendung in Nähe heißer Turbinen und Motoren bzw. in der Nähe von laufenden Turbinen. Diese Nachteile erfordern gleichzeitig eine intensive Wartungs- und Überprüfungstätigkeit, die vor, während und/oder nach jedem Betankungsvorgang zu erfolgen hat. Weiterhin weisen die aus dem Stand der Technik bekannten starren Kopfstücke bzw. Betankungssysteme den erheblichen Nachteil auf, dass das Kopfstück in seiner starren Ausführungsform nur schwer gehandhabt werden kann bzw. nur sehr aufwendig und unter höheren Kraftanstrengungen an den Tankstutzen des zu betankenden Fahr- bzw. Flugzeugs angeschlossen werden kann. Schwierigkeiten treten insbesondere bei der Unterflügelbetankung von Großraumflugzeugen auf, wenn der Betankungskupplung vertikal nach oben ausgerichtet an den Tankstutzen des Flugzeugs angeschlossen werden muss.

Da diese Kopfstücke nicht aus Schläuchen gebildet sind, sondern aus Rohrstücken und zwischen den Rohrstücken vorgesehenen Drehgelenken besteht, kann das Kopfstück bei Bedarf auch mit Rädern ausgestattet werden, wodurch das Verfahren des Systems ermöglicht wird.

Die DE 35 23 472 A1 und die US 4,993,463 beschreiben jeweils gattungsbildende Kopfstücke mit einer Betankungskupplung für den Anschluss an einen Tank, wobei für den Durchfluss des Treibstoffs mehrere starre Rohrabschnitte vorgesehen sind. Die Rohrabschnitte zur verstellbaren räumlichen Anordnung der Betankungskupplung mit mehreren Drehgelenken verbunden. Die Bedienbarkeit und der Bedienungskomfort dieser bekannten Kopfstücke ist aber gering

Der Erfindung liegt somit die Aufgabe zugrunde, ein Kopfstück zu schaffen, das ohne Handhabungsschwierigkeiten, in einfacher Weise zu bedienen ist und praktisch momentenfrei an einen Anschlussstutzen anschließbar ist, das einen geringen Wartungsaufwand erfordert, sowohl für die Be- als auch für die Entladung geeignet ist, und die Möglichkeit bietet das Kopfstück mit einem außerordentlich geringen Kraftaufwand anzuschließen. Derartige Kopfstücke können an ortsfesten oder transportablen Be- und/oder Entladungsanlagen, insbesondere an Be- und/oder Enttankungsanlagen wie sie beispielsweise auf Flugplätzen eingesetzt werden, Verwendung finden.

Diese Aufgabe wird durch ein Kopfstück nach der Lehre des Patentanspruchs 1 gelöst.

Vorteilhafte Ausführungsformen der Erfindung sind Gegenstand der Unteransprüche.

In zunächst bekannter Art und Weise weist das Kopfstück eine Betankungskupplung für den Anschluss an einen Tank auf, wobei für den Durchfluss des Treibstoffs mehrere starre Rohrabschnitte vorgesehen sind, wobei die Rohrabschnitte zur verstellbaren räumlichen Anordnung der Betankungskupplung mit mehreren Drehgelenken verbunden sind, und wobei zur Höhenverstellung der Betankungskupplung zumindest ein erstes Drehgelenk um eine Horizontalschwenkachse verschwenkbar ist. Die für das erfindungsgemäße Kopfstück angegebene Nummerierung der Drehgelenke und Rohrabschnitte beschreibt nicht die Reihenfolge der Bauteile am Kopfstück, sondern soll lediglich eine eindeutige Zuordnung der angebebenen Bezeichnungen zu den Bauteilen am Kopfstück ermöglichen.

Gattungsgemäß zeichnet sich das vorgeschlagene Kopfstück dadurch aus, dass am Kopfstück ein Parallelhebelantrieb vorgesehen ist, mit dem ein erster Rohrabschnitt bei Höhenverstellung der Betankungskupplung in einer bestimmten Winkelposition gehalten wird. Dieser Parallelhebelantrieb erlaubt es insbesondere, dass ein Rohrstück des Kopfstücks bei einer Höhenverstellung des ersten Rohrabschnitts in einer bestimmten Winkelposition, insbesondere in einer Vertikalposition, gehalten wird und somit die Ausrichtung der Betankungskupplung an den Tankstutzen eines Fahr- bzw. Flugzeugs erheblich vereinfacht wird.

Erfindungsgemäß ist ein viertes Drehgelenk über einen vierten starren Rohrabschnitt mit einem direkt benachbarten fünften Drehgelenk verbunden ist, wobei das fünfte Drehgelenk um eine Horizontalschwenkachse verschwenkbar ist und über einen fünften Rohrabschnitt mit der Betankungskupplung verbunden ist. Der fünfte Rohrabschnitt ist dabei zweiteilig fünfte Rohrabschnitt ist dabei zweiteilig ausgebildet ist, wodurch der die Betankungskupplung tragende Teil des fünften Rohrabschnitts relativ zum anderen Teil des fünften Rohrabschnitts um die Längsachse des fünften Rohrabschnitts verdreht werden kann. Dies ermöglicht einen hohen Bedienungskomfort.

Eine Ausführungsform der Erfindung sieht vor, dass am Parallelhebelantrieb eine Justiervorrichtung vorgesehen ist, durch deren Einstellung die Winkelposition des ersten Rohrabschnitts justierbar ist. Mithilfe dieser Justiervorrichtung ist eine nachträgliche Korrektur bzw. Anpassung der Winkelposition des ersten Rohrabschnitts möglich.

Die Justiervorrichtung selber wird dabei von zwei gegenläufigen Gewinden gebildet, mit denen die Länge eines Hebels des Parallelhebelantriebs veränderbar ist.

Des Weiteren ist vorgesehen, dass das zweite Drehgelenk in Betankungsrichtung des Treibstoffs dem ersten Drehgelenk nachgeordnet ist.

Um eine möglichst stabile und sichere Ausgestaltung des Kopfstücks zu realisieren sind das erste Drehgelenk und das zweite Drehgelenk über einen zweiten starren Rohrabschnitt direkt miteinander verbunden.

Dabei sind die Drehgelenke so angeordnet, dass die Horizontalschwenkachsen des ersten und zweiten Drehgelenks parallel zueinander verlaufen.

Weiter ist vorgesehen, dass das erste Drehgelenk über einen dritten starren Rohrabschnitt mit einem direkt benachbarten dritten Drehgelenk verbunden ist, wobei das dritte Drehgelenk um eine Vertikalschwenkachse verschwenkbar ist.

Dabei ist das dritte Drehgelenk in Betankungsrichtung des Treibstoffs so angeordnet, dass es dem ersten Drehgelenk vorgeordnet ist.

Das zweite Drehgelenk wiederum ist über den ersten Rohrabschnitt mit einem direkt benachbarten vierten Drehgelenk verbunden, wobei das vierte Drehgelenk um die durch den Parallelhebelantrieb in einer bestimmten Winkelposition gehaltenen Mittelachse des ersten Rohrabschnitts, insbesondere um eine Vertikalschwenkachse, verschwenkbar ist.

In weiterer Anordnung ist vorgesehen, dass das vierte Drehgelenk in Betankungsrichtung des Treibstoffs dem zweiten Drehgelenk nachgeordnet ist.

Die Vertikalschwenkachse des dritten Drehgelenks und die Vertikalschwenkachse des vierten Drehgelenks sind so angeordnet, dass sie parallel zueinander verlaufen.

Das dritte Drehgelenk wiederum kann über einen sechsten starren Rohrabschnitt mit einem direkt benachbarten sechsten Drehgelenk verbunden sein.

Eine bevorzugte Ausführungsform der Erfindung sieht vor, dass am Kopfstück eine Balanceeinrichtung vorgesehen ist, mit der zumindest ein Rohrabschnitt und/oder zumindest ein Drehgelenk und/oder die Betankungskupplung in der Schwebe gehalten wird. Mit Hilfe dieser Balanceeinrichtung, beispielsweise einem Hydraulikdämpfer, ist es möglich das Kopfstück mit minimalem Kraftaufwand so auszurichten, dass ein bequemer und sicherer Anschluss der Betankungskupplung an den Tankstutzen des zu befüllenden Fahr- bzw. Flugzeugs ermöglicht wird. Bei der Ausrichtung der Betankungskupplung kann diese in beliebigen Anschlusswinkeln und Anschlussstellungen im wesentlichen kraftfrei ausgerichtet werden.

Die Balanceeinrichtung selber kann dabei so ausgelegt sein, dass sie den zweiten starren Rohrabschnitt in der Schwebe hält. Ferner ist die Balanceeinrichtung so ausgestaltet, dass sie den zweiten starren Rohrabschnitt gegenüber dem dritten starren Rohrabschnitt abstützt.

Eine weitere bevorzugte Ausführungsform der Erfindung sieht vor, dass die Balanceeinrichtung aus einem vorgespannten Federpaket besteht. Es ist natürlich auch denkbar die Balanceeinrichtung in einer anderen Art und Weise auszugestalten. In welcher Art und Weise die Balanceeinrichtung genau ausgestaltet ist spielt erfindungsgemäß jedoch keine Rolle.

Eine weitere besonders bevorzugte Ausführungsform der Erfindung sieht vor, dass die Vorspannung des Federpakets einstellbar ist. Somit kann die Balanceeinrichtung auch nach Erweiterung bzw. Reduzierung verschiedener starrer Rohrabschnitte bzw. Drehgelenke den neuen Kraftverhältnissen angepasst werden.

Weiter ist vorgesehen, dass der Parallelhebelantrieb vom ersten starren Rohrabschnitt, den zweiten starren Rohrabschnitt und drei Verbindungshebeln gebildet wird, wobei der erste Verbindungshebel in einer vertikal gerichteten Position starr am dritten Rohrabschnitt befestigt ist, und wobei der zweite Verbindungshebel parallel zum zweiten starren Rohrabschnitt angeordnet ist, und wobei der dritte Verbindungshebel starr am ersten Rohrabschnitt befestigt ist, und wobei der zweite Verbindungshebel gelenkig mit dem ersten Verbindungshebel und dem dritten Verbindungshebel verbunden ist.

Besonders vorteilhaft ist es, wenn das vierte Drehgelenk direkt über dem sechsten Drehgelenk anordenbar ist, wobei insbesondere bei Anordnung des vierten Drehgelenks über dem sechsten Drehgelenk die Vertikalschwenkachse des vierten Drehgelenks mit der Vertikalschwenkachse des sechsten Drehgelenks fluchten sollte.

Dies wird insbesondere dann ermöglicht, wenn der horizontale Abstand zwischen der Vertikalschwenkachse des sechsten Drehgelenks und der Vertikalschwenkachse des dritten Drehgelenks im wesentlichen dem horizontale Abstand zwischen der Vertikalschwenkachse des dritten Drehgelenks und der Vertikalschwenkachse des vierten Drehgelenks entspricht. Im Ergebnis wird dadurch eine sehr große Längenverstellung des Kopfstücks möglich. Steht das vierte Drehgelenk direkt über dem sechsten Drehgelenk so ergibt sich die minimal Länge des Kopfstücks. Die maximale Länge des Kopfstücks wird erreicht, wenn das zweite Rohrstück und das sechste Rohrstück miteinander horizontal hintereinander angeordnet werden.

Ein Ausführungsbeispiel der Erfindung ist in den Zeichnungen schematisch dargestellt und wird nachfolgend beispielhaft beschrieben.

Es zeigt:
- **Fig. 1**: die Seitenansicht eines erfindungsgemäß ausgebildeten Kopfstücks eines Betankungssystems;

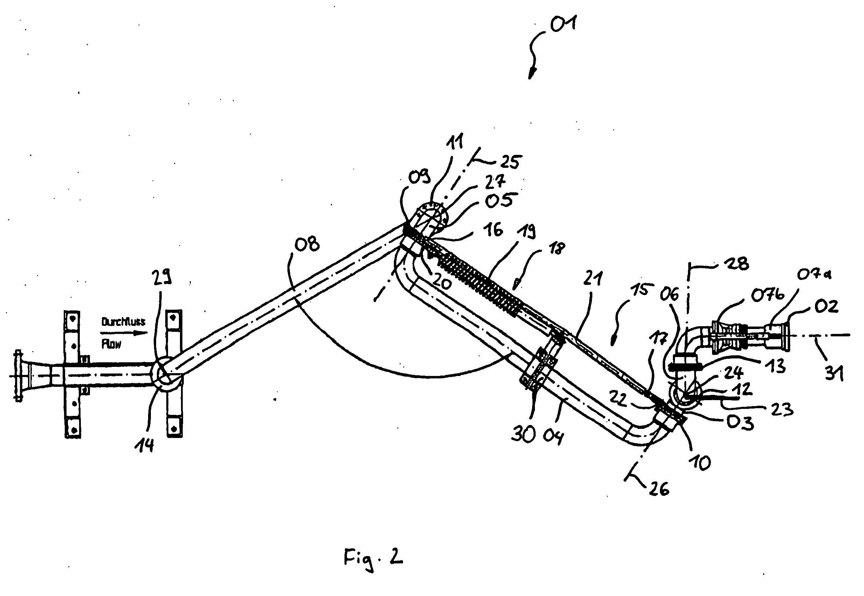

- **Fig. 2**: das Kopfstück gemäß Fig. 1 in Ansicht von oben.

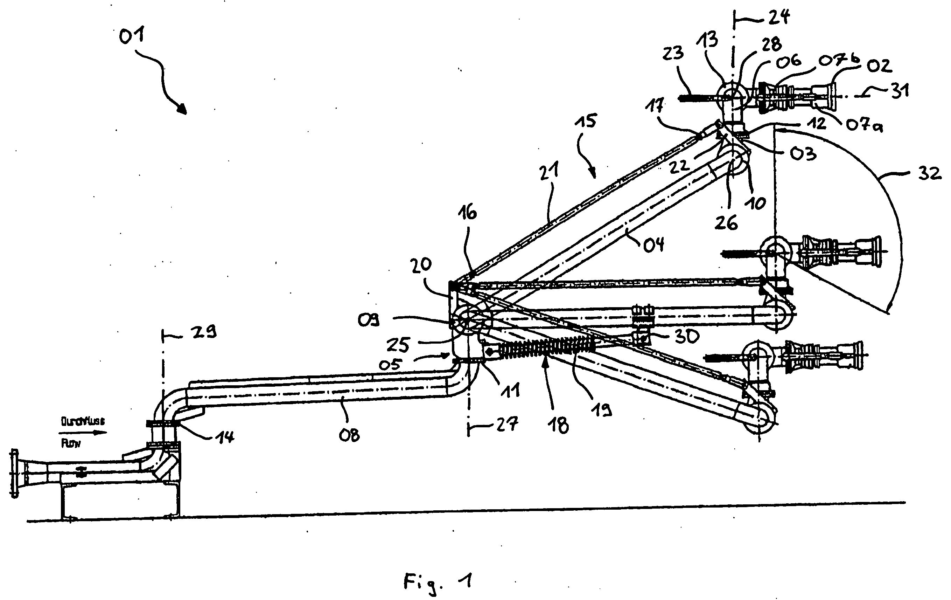

Das in **Fig. 1** dargestellte Kopfstück 01 besteht aus mehreren Drehgelenken 09, 10, 11, 12, 13, 14 und mehreren mit den Drehgelenken verbundenen starren Rohrabschnitten 03, 04, 05, 06, 07 und 08. Dem fünften Drehgelenk 13 ist über den fünften starren Rohrabschnitt 07 eine Betankungskupplung 02 nachgelagert. Am fünften starren Rohrabschnitt 07 ist zudem ein Griffstück 23 vorgesehen, mit dem das Kopfstück 01 bzw. die Betankungskupplung 02 geführt werden kann.

Über die am Kopfstück 01 angeordneten Drehgelenke 09, 10, 11, 12, 13 und 14 kann das Kopfstück 01, d.h. insbesondere der Abstand, die Höhe und der Winkel der Betankungskupplung 02, frei verstellt und ausgerichtet werden. Um eine möglichst genaue Verstellung des Kopfstücks 01 zu gewährleisten bzw. das Einführen der Betankungskupplung 02 in den Tank des Fahr- bzw. Flugzeugs zu vereinfachen, ist am Kopfstück 01 eine Balanceeinrichtung 18 vorgesehen. Diese Balanceeinrichtung 18 besteht im Wesentlichen aus einem vorgespannten Federpaket 19, welches über eine Verstelleinrichtung 30 einstellbar ist. Die Vorspannung des Federpakets 19 ist über die Verstelleineinrichtung 30 einstellbar, so dass die Vorspannung des Federpakets 19 so gewählt werden kann, dass hierdurch das Gewicht der starren Rohrstücke 03, 04, 06, 07, der Betankungskupplung 02 sowie der Drehgelenke 10, 12 und 13 aufgenommen wird. Durch diesen Gewichtsausgleich ist es für einen einzigen Mann ohne Mühe möglich, die Betankungskupplung 02 an den entsprechende Tankstutzen anzuschließen.

Damit die Betankungskupplung 02 des Kopfstücks 01 möglichst kraftsparend und einfach für den Benutzer am Tankstutzen des Fahr- bzw. Flugzeugs ausgerichtet und angeschlossen werden kann, ist am Kopfstück 01 ein Parallelhebelantrieb 15 vorgesehen. Dieser Parallelhebelantrieb 15 bewirkt, dass der Rohrabschnitt 03 bei Vertikalverstellung der Betankungskupplung 02 immer in einer vertikal nach oben gerichteten Position gehalten wird, unabhängig davon in welcher Höhenposition sich der Tankstutzen befindet. Der Parallelhebelantrieb 15 wird im Wesentlichen vom ersten starren Rohrabschnitt 03, dem zweiten starren Rohrabschnitt 04 sowie drei Verbindungshebeln 20, 21 und 22 gebildet. Ferner ist am Parallelhebelantrieb 15 eine Justiervorrichtung vorgesehen, wobei die Justiervorrichtung von zwei gegenläufigen Gewinden 16 und 17 gebildet wird, mit denen die Länge eines Hebels, insbesondere des Verbindungshebels 21, veränderbar ist.

Der erste Verbindungshebel 20 ist in einer vertikal gerichteten Position starr am dritten Rohrabschnitt 05 befestigt. Der zweite Verbindungshebel 21 ist im Wesentlichen parallel zum zweiten starren Rohrabschnitt 04 angeordnet. Der dritte Verbindungshebel 22 wiederum ist starr am ersten Rohrabschnitt 03 befestigt, wobei der zweite Verbindungshebel 21 gelenkig mit dem ersten Verbindungshebel 20 und dem dritten Verbindungshebel 22 verbunden ist.

Durch die Ausgestaltung des Parallelhebelantriebs 15 in Verbindung mit den beiden horizontal drehbar gelagerten Drehgelenken 09 und 10 kann das Kopfstück 01 bzw. die Betankungskupplung 02 einfach und ohne größere Kraftanstrengungen in seiner verstellt werden. Gleichzeitig wird gewährleistet, dass die Betankungskupplung 02 in jeder Höhenposition einfach an einem Tankstutzen ausgerichtet und angeschlossen werden kann. Zum Anschluss der Betankungskupplung 02 am Tankstutzen kann der Winkel der Betankungskupplung 02 nach der Annäherung am Tankstutzen durch Verschwenken des Drehgelenks 13 im Schwenkbereich 32 verändert werden. Bei der Unterflügelbetankung wird die Betankungskupplung 02 beispielsweise vertikal nach oben geschwenkt.

Der Anschlusswinkel der Betankungskupplung 02 kann durch verdrehen des vorderen Teils 07a des fünften Rohrstücks 07 relativ zum hinteren Teil 07b eingestellt werden, um die Betankungskupplung 02 beispielsweise am Tankstutzen zu verriegeln.

Die Anordnung des Gelenks 12 direkt über dem Gelenk 14 erlaubt es die Länge des Kopfstücks 01 zu minimieren. Dabei können die Vertikalschwenkachsen 24 und 29 in eine Flucht gebracht werden.

Da das Kopfstück 01 im Wesentlichen aus Rohrstücken besteht, kann es gleichermaßen gut für die Be- wie auch zur Enttankung eingesetzt werden. Durch die hohe Anzahl der Drehgelenke ist die Betankungskupplung 02 frei ausrichtbar.

Ein weiterer Vorteil der Rohrstücke bzw. Rohrabschnitte liegt darin, dass die einzelnen Rohrabschnitte der erforderlichen Betankungsleistung angepasst sind, so dass eine sehr schnelle Betankungszeit garantiert werden kann.

Darüber hinaus gewährleistet die Verwendung einer Balanceeinheit 18 in Verbindung mit dem Parallelhebelantrieb 15 am Kopfstück 01 eine einfache und mühelose Einmannbedienung, da die Horizontalachse 28 auch bei Vertikalverstellung der Betankungskupplung 02 immer in der eingestellten Position gehalten wird.

### Bezugszeichenliste

- 01: Kopfstück
- 02: Betankungskupplung
- 03: erster starrer Rohrabschnitt
- 04: zweiter starrer Rohrabschnitt
- 05: dritter starrer Rohrabschnitt
- 06: vierter starrer Rohrabschnitt
- 07: fünfter Rohrabschnitt
- 08: sechster starrer Rohrabschnitt
- 09: erstes Drehgelenk
- 10: zweites Drehgelenk
- 11: drittes Drehgelenk
- 12: viertes Drehgelenk
- 13: fünftes Drehgelenk
- 14: sechstes Drehgelenk
- 15: Parallelhebelantrieb
- 16: Gewinde
- 17: Gewinde
- 18: Balanceeinrichtung
- 19: Federpaket
- 20: erster Verbindungshebel
- 21: zweiter Verbindungshebel
- 22: dritter Verbindungshebel
- 23: Griffstück
- 24: Vertikalschwenkachse
- 25: Horizontalschwenkachse
- 26: Horizontalschwenkachse
- 27: Vertikalschwenkachse
- 28: Horizontalschwenkachse
- 29: Vertikalschwenkachse
- 30: Verstelleinrichtung
- 31: Längsachse
- 32: Schwenkbereich

## Patentansprüche

1. Kopfstück (01) mit einer Betankungskupplung (02) für den Anschluss an einen Tank, wobei für den Durchfluss des Treibstoffs mehrere starre Rohrabschnitte (03, 04, 05, 06, 07, 08) vorgesehen sind, und wobei die Rohrabschnitte (03, 04, 05, 06, 07, 08) zur verstellbaren räumlichen Anordnung der Betankungskupplung (02) mit mehreren Drehgelenken (09, 10, 11, 12, 13, 14) verbunden sind, und wobei zur Höhenverstellung der Betankungskupplung (02) zumindest ein erstes Drehgelenk (09) und ein zweites Drehgelenk (10) jeweils um eine Horizontalschwenkachse (25, 26) verschwenkbar sind, wobei am Kopfstück (01) ein Parallelhebelantrieb (15) vorgesehen ist, mit dem ein erster Rohrabschnitt (03) bei Höhenverstellung der Betankungskupplung (02) in einer bestimmten Winkelposition gehalten wird,
**dadurch gekennzeichnet,**
**dass** ein viertes Drehgelenk (12) über einen vierten starren Rohrabschnitt (06) mit einem direkt benachbarten fünften Drehgelenk (13) verbunden ist, wobei das fünfte Drehgelenk (13) um eine Horizontalschwenkachse (28) verschwenkbar ist, und über einen fünften Rohrabschnitt (07) mit der Betankungskupplung (02) verbunden ist wobei der fünfte Rohrabschnitt (07) zweiteilig ausgebildet ist, und wobei der die Betankungskupplung (02) tragende Teil (07a) des fünften Rohrabschnitts (07) relativ zum anderen Teil (07b) des fünften Rohrabschnitts (07) um die Längsachse (31) des fünften Rohrabschnitts (07) verdreht werden kann.

2. Kopfstück nach Anspruch 1,
**dadurch gekennzeichnet,**
**dass** der erste Rohrabschnitt (03) in einer ungefähr vertikalen Ausrichtung gehalten wird.

3. Kopfstück nach Anspruch 1 oder 2,
**dadurch gekennzeichnet,**
**dass** am Parallelhebelantrieb (15) eine Justiervorrichtung vorgesehen ist, durch deren Einstellung die Winkelposition des ersten Rohrabschnitts (03) justierbar ist.

4. Kopfstück nach Anspruch 3,
**dadurch gekennzeichnet,**
**dass** die Justiervorrichtung von zwei gegenläufigen Gewinden (16, 17) gebildet wird, mit denen die Länge eines Hebels (21) des Parallelhebelantriebs (15) veränderbar ist.

5. Kopfstück nach einem der Ansprüche 1 bis 4,
**dadurch gekennzeichnet,**
**dass** das zweite Drehgelenk (10) in Betankungsrichtung des Treibstoffes dem ersten Drehgelenk (09) nachgeordnet ist.

6. Kopfstück nach einem der Ansprüche 1 bis 5,
**dadurch gekennzeichnet,**
**dass** erstes Drehgelenk (09) und zweites Drehgelenk (10) über einen zweiten starren Rohrabschnitt (04) direkt miteinander verbunden sind.

7. Kopfstück nach einem der Ansprüche 1 bis 6,
**dadurch gekennzeichnet**
**dass** die Horizontalschwenkachsen (25, 26) des ersten (09) und zweiten Drehgelenks (10) parallel zueinander verlaufen.

8. Kopfstück nach einem der Ansprüche 1 bis 7,
**dadurch gekennzeichnet,**
**dass** das erste Drehgelenk (09) über einen dritten starren Rohrabschnitt (05) mit einem direkt benachbarten dritten Drehgelenk (11) verbunden ist, wobei das dritte Drehgelenk (11) um eine Vertikalschwenkachse (27) verschwenkbar ist.

9. Kopfstück nach Anspruch 8,
**dadurch gekennzeichnet**
**dass** das dritte Drehgelenk (11) in Betankungsrichtung des Treibstoffes dem ersten Drehgelenk (09) vorgeordnet ist.

10. Kopfstück nach einem der Ansprüche 1 bis 9,
**dadurch gekennzeichnet,**
**dass** das zweite Drehgelenk (10) über den ersten Rohrabschnitt (03) mit einem direkt benachbarten vierten Drehgelenk (12) verbunden ist, wobei das vierte Drehgelenk (12) um die durch den Parallelhebelantrieb (15) in einer bestimmten Winkelposition gehaltenen Mittelachse des ersten Rohrabschnitts (03), insbesondere um eine Vertikalschwenkachse (24), verschwenkbar ist.

11. Kopfstück nach Anspruch 10,
**dadurch gekennzeichnet**
**dass** das vierte Drehgelenk (12) in Betankungsrichtung des Treibstoffes dem zweiten Drehgelenk (10) nachgeordnet ist.

12. Kopfstück nach Anspruch 10 oder 11,
**dadurch gekennzeichnet,**
**dass** die Vertikalschwenkachse (27) des dritten Drehgelenks (11) parallel zur Vertikalschwenkachse (24) des vierten Drehgelenks (12) verläuft.

13. Kopfstück nach einem der Ansprüche 8 bis 12,
**dadurch gekennzeichnet,**
**dass** das dritte Drehgelenk (11) über einen sechsten starren Rohrabschnitt (08) mit einem direkt benachbarten sechsten Drehgelenk (14) verbunden ist.

14. Kopfstück nach einem der Ansprüche 8 bis 13,
**dadurch gekennzeichnet,**
**dass** die Vertikalschwenkachse (27) des dritten Drehgelenks (11) parallel zur Vertikalschwenkachse (29) des sechsten Drehgelenks (14) verläuft.

15. Kopfstück nach einem der Ansprüche 1 bis 14,
**dadurch gekennzeichnet,**
**dass** am Kopfstück (01) eine Balanceeinrichtung (18) vorgesehen ist, mit der zumindest ein Rohrabschnitt (03, 04, 06, 07) und/oder zumindest ein Drehgelenk (10, 12, 13) und/oder die Betankungskupplung (02) in der Schwebe gehalten wird.

16. Kopfstück nach Anspruch 15,
**dadurch gekennzeichnet,**
**dass** die Balanceeinrichtung (18) den zweiten starren Rohrabschnitt (04) in der Schwebe hält.

17. Kopfstück nach einem der Ansprüche 15 oder 16,
**dadurch gekennzeichnet,**
**dass** die Balanceeinrichtung (18) den zweiten starren Rohrabschnitt (04) gegenüber dem dritten starren Rohrabschnitt (05) abstützt.

18. Kopfstück nach einem der Ansprüche 15 bis 17,
**dadurch gekennzeichnet,**
**dass** die Balanceeinrichtung (18) ein vorgespanntes Federpaket (19) aufweist.

19. Kopfstück nach Anspruch 18,
**dadurch gekennzeichnet,**
**dass** die Vorspannung des Federpaketes (19) einstellbar ist

20. Kopfstück nach einem der Ansprüche 1 bis 19,
**dadurch gekennzeichnet,**
**dass** der Parallelhebelantrieb (15) vom ersten starren Rohrabschnitt (03), dem zweiten starren Rohrabschnitt (04) und drei Verbindungshebeln (20, 21, 22) gebildet wird, wobei der erste Verbindungshebel (20) in einer, insbesondere vertikal gerichteten Position, starr am dritten Rohrabschnitt (05) befestigt ist, und wobei der zweite Verbindungshebel (21) parallel zum zweiten starren Rohrabschnitt (04) angeordnet ist, und wobei der dritte Verbindungshebel (22) starr am ersten Rohrabschnitt (03) befestigt ist, und wobei der zweite Verbindungshebel (21) gelenkig mit dem ersten Verbindungshebel (20) und dem dritten Verbindungshebel (22) verbunden ist.

21. Kopfstück nach einem der Ansprüche 1 bis 20,
**dadurch gekennzeichnet,**
**dass** das vierte Drehgelenk (12) direkt über dem sechsten Drehgelenk (14) anordenbar ist.

22. Kopfstück nach Anspruch 21,
**dadurch gekennzeichnet,**
**dass** bei Anordnung des vierten Drehgelenks (12) über dem sechsten Drehgelenk (14) die Vertikalschwenkachse (24) des vierten Drehgelenks (12) mit der Vertikalschwenkachse (29) des sechsten Drehgelenks (14) fluchtet.

23. Kopfstück nach einem der Ansprüche 1 bis 22,
**dadurch gekennzeichnet,**
**dass** der horizontale Abstand zwischen der Vertikalschwenkachse (29) des sechsten Drehgelenks (14) und der Vertikalschwenkachse (27) des dritten Drehgelenks (11) im wesentlichen dem horizontale Abstand zwischen der Vertikalschwenkachse (24) des vierten Drehgelenks (12) und der Vertikalschwenkachse (27) des dritten Drehgelenks (11) entspricht.

## Claims

1. A head member (01) with a refuelling coupling (02) for attachment to a tank, wherein a plurality of rigid pipe portions (03, 04, 05, 06, 07, 08) are provided for the throughflow of the fuel, and wherein the pipe portions (03, 04, 05, 06, 07, 08) are connected to a plurality of swivel joints (09, 10, 11, 12, 13, 14) for the adjustable spatial arrangement of the refuelling coupling (02), and wherein at least one first swivel joint (09) and one second swivel joint (10) are pivotable in each case about a horizontal pivot axis (25, 26) for the vertical adjustment of the refuelling coupling (02), wherein a parallel-lever drive (15), by which a first pipe portion (03) is held in a specified angular position during the vertical adjustment of the refuelling coupling (02), is provided on the head member (01), **characterized in that** a fourth swivel joint (12) is connected by way of a fourth rigid pipe portion (06) to a directly adjacent fifth swivel joint (13), wherein the fifth swivel joint (13) is pivotable about a horizontal pivot axis (28) and is connected by way of a fifth pipe portion (07) to the refuelling coupling (02), wherein the fifth pipe portion (07) is constructed in two parts, and wherein the part (07a) of the fifth pipe portion (07) carrying the refuelling coupling (02) can be turned relative to the other part (07b) of the fifth pipe portion (07) about the longitudinal axis (31) of the fifth pipe portion (07).

2. A head member according to Claim 1, **characterized in that** the first pipe portion (03) is held in a substantially vertical orientation.

3. A head member according to Claim 1 or 2, **characterized in that** an adjustment apparatus, by the setting of which the angular position of the first pipe portion (03) is capable of being adjusted, is provided on the parallel-lever drive (15).

4. A head member according to Claim 3, **characterized in that** the adjustment apparatus is formed by two threads (16, 17) which run in opposite directions and by which the length of one lever (21) of the parallel-lever drive (15) is capable of being altered.

5. A head member according to any one of Claims 1 to 4, **characterized in that** the second swivel joint (10) is arranged downstream of the first swivel joint (09) in the refuelling direction of the fuel.

6. A head member according to any one of Claims 1 to 5, **characterized in that** the first swivel joint (09) and the second swivel joint (10) are directly connected to each other by way of a second rigid pipe portion (04).

7. A head member according to any one of Claims 1 to 6, **characterized in that** the horizontal pivot axes (25, 26) of the first (09) and the second swivel joint (10) extend parallel to each other.

8. A head member according to any one of Claims 1 to 7, **characterized in that** the first swivel joint (09) is connected by way of a third rigid pipe portion (05) to a directly adjacent third swivel joint (11), wherein the third swivel joint (11) is pivotable about a vertical pivot axis (27).

9. A head member according to Claim 8, **characterized in that** the third swivel joint (11) is arranged upstream of the first swivel joint (09) in the refuelling direction of the fuel.

10. A head member according to any one of Claims 1 to 9, **characterized in that** the second swivel joint (10) is connected by way of the first pipe portion (03) to a directly adjacent fourth swivel joint (12), wherein the fourth swivel joint (12) is pivotable about the central axis of the first pipe portion (03) held in a specified angular position by the parallel-lever drive (15), in particular about a vertical pivot axis (24).

11. A head member according to Claim 10, **characterized in that** the fourth swivel joint (12) is arranged downstream of the second swivel joint (10) in the refuelling direction of the fuel.

12. A head member according to Claim 10 or 11, **characterized in that** the vertical pivot axis (27) of the third swivel joint (11) extends parallel to the vertical pivot axis (24) of the fourth swivel joint (12).

13. A head member according to any one of Claims 8 to 12, **characterized in that** the third swivel joint (11) is connected by way of a sixth rigid pipe portion (08) to a directly adjacent sixth swivel joint (14).

14. A head member according to any one of Claims 8 to 13, **characterized in that** the vertical pivot axis (27) of the third swivel joint (11) extends parallel to the vertical pivot axis (29) of the sixth swivel joint (14).

15. A head member according to any one of Claims 1 to 14, **characterized in that** a balance device (18), by which at least one pipe portion (03, 04, 06, 07) and/or at least one swivel joint (10, 12, 13) and/or the refuelling coupling (02) is or are held in suspension, is provided on the head member (01).

16. A head member according to Claim 15, **characterized in that** the balance device (18) holds the second rigid pipe portion (04) in suspension.

17. A head member according to one of Claims 15 or 16, **characterized in that** the balance device (18) supports the second rigid pipe portion (04) with respect to the third rigid pipe portion (05).

18. A head member according to any one of Claims 15 to 17, **characterized in that** the balance device (18) has a pre-stressed stack of springs (19).

19. A head member according to Claim 18, **characterized in that** the pre-stressing of the stack of springs (19) is capable of being set.

20. A head member according to any one of Claims 1 to 19, **characterized in that** the parallel-lever drive (15) is formed by the first rigid pipe portion (03), the second rigid pipe portion (04) and three connecting levers (20, 21, 22), wherein the first connecting lever (20) is fastened in a rigid manner to the third pipe portion (05) in a position, in particular, orientated vertically, and wherein the second connecting lever (21) is arranged parallel to the second rigid pipe portion (04), and wherein the third connecting lever (22) is fastened in a rigid manner to the first pipe portion (03), and wherein the second connecting lever (21) is connected in an articulated manner to the first connecting lever (20) and the third connecting lever (22).

21. A head member according to any one of Claims 1 to 20, **characterized in that** the fourth swivel joint (12) is capable of being arranged directly above the sixth swivel joint (14).

22. A head member according to Claim 21, **characterized in that** when the fourth swivel joint (12) is arranged above the sixth swivel joint (14) the vertical pivot axis (24) of the fourth swivel joint (12) is in alignment with the vertical pivot axis (29) of the sixth swivel joint (14).

23. A head member according to any one of Claims 1 to 22, **characterized in that** the horizontal distance between the vertical pivot axis (29) of the sixth swivel joint (14) and the vertical pivot axis (27) of the third swivel joint (11) corresponds substantially to the horizontal distance between the vertical pivot axis (24) of the fourth swivel joint (12) and the vertical pivot axis (27) of the third swivel joint (11).

## Revendications

1. Tête de ligne (01) avec un accouplement de ravitaillement (02) pour le raccordement à un réservoir, dans laquelle plusieurs segments de tubes rigides (03, 04 05, 06, 07, 08) sont prévus pour l'écoulement du carburant et dans laquelle les segments de tubes (03, 04, 05, 06, 07, 08) sont reliés à plusieurs joints rotatifs (09, 10, 11, 12, 13, 14) pour l'agencement spatial réglable de l'accouplement de ravitaillement (02) et dans laquelle, pour le réglage en hauteur de l'accouplement de ravitaillement (02), au moins premier joint rotatif (09) et un deuxième joint rotatif (10) peuvent pivoter chacun autour d'un axe de pivotement horizontal (25, 26), un moyen d'entraînement à levier parallèle (15) avec lequel un premier segment de tube (03) est maintenu dans une position angulaire déterminée pendant le réglage en hauteur de l'accouplement de ravitaillement (02) étant prévu dans la tête de ligne (01),
**caractérisée en ce que**
un quatrième joint rotatif (12) est relié à un cinquième joint rotatif (13) directement adjacent au moyen d'un quatrième segment de tube rigide (06), le cinquième joint rotatif (13) pouvant pivoter autour d'un axe de pivotement horizontal (28) et étant relié à l'accouplement de ravitaillement (02) au moyen d'un cinquième segment de tube (07), le cinquième segment de tube (07) étant constitué de deux parties et la partie (07a) du cinquième segment de tube (07) qui porte l'accouplement de ravitaillement (02) pouvant être tournée par rapport à l'autre partie (07b) du cinquième segment de tube (07) autour de l'axe longitudinal (31) du cinquième segment de tube (07).

2. Tête de ligne selon la revendication 1, **caractérisée en ce que** le premier segment de tube (03) est maintenu dans une direction à peu près verticale.

3. Tête de ligne selon la revendication 1 ou 2 **caractérisée en ce qu'**il est prévu un dispositif d'ajustage sur le moyen d'entraînement à levier parallèle (15) dont le réglage permet d'ajuster la position angulaire du premier segment de tube (03).

4. Tête de ligne selon la revendication 3 **caractérisée en ce que** le dispositif d'ajustage est formé par deux filetages opposés (16, 17) avec lesquels on peut faire varier la longueur d'un levier (21) du moyen d'entraînement à levier parallèle (15).

5. Tête de ligne selon l'une quelconque des revendications 1 à 4, **caractérisée en ce que** le deuxième joint rotatif (10) est disposé après le premier joint rotatif (09) dans la direction de ravitaillement du carburant.

6. Tête de ligne selon l'une quelconque des revendications 1 à 5, **caractérisée en ce que** le premier joint rotatif (09) et le deuxième joint rotatif (10) sont reliés directement l'un avec l'autre au moyen d'un deuxième segment de tube rigide (04).

7. Tête de ligne selon l'une quelconque des revendications 1 à 6, **caractérisée en ce que** les axes de pivotement horizontal (25, 26) du premier (09) et du deuxième joint rotatif (10) s'étendent parallèlement l'un à l'autre.

8. Tête de ligne selon l'une quelconque des revendications 1 à 7, **caractérisée en ce que** le premier joint rotatif (09) est relié à un troisième joint rotatif (11) directement adjacent au moyen d'un troisième segment de tube rigide (05), le troisième joint rotatif (11) pouvant pivoter autour d'un axe de pivotement vertical (27).

9. Tête de ligne selon la revendication 8, **caractérisée en ce que** le troisième joint rotatif (11) est disposé avant le premier joint rotatif (09) dans la direction de ravitaillement du carburant.

10. Tête de ligne selon l'une quelconque des revendications 1 à 9, **caractérisée en ce que** le deuxième joint rotatif (10) est relié à un quatrième joint rotatif (12) directement adjacent au moyen du premier segment de tube rigide (03), le quatrième joint rotatif (12) pouvant pivoter autour de l'axe médian, fixé dans une position angulaire déterminée par le moyen d'entraînement à levier parallèle (15), du premier segment de tube (03), en particulier autour d'un axe de pivotement vertical (24).

11. Tête de ligne selon la revendication 10, **caractérisée en ce que** le quatrième joint rotatif (12) est disposé après le deuxième joint rotatif (10) dans la direction de ravitaillement du carburant.

12. Tête de ligne selon la revendication 10 ou 11, **caractérisée en ce que** l'axe de pivotement vertical (27) du troisième joint rotatif (11) s'étend parallèlement à l'axe de pivotement vertical (24) du quatrième joint rotatif (12).

13. Tête de ligne selon l'une quelconque des revendications 8 à 12, **caractérisée en ce que** le troisième joint rotatif (11) est relié à un sixième joint rotatif (14) directement adjacent au moyen d'un sixième segment de tube rigide (08).

14. Tête de ligne selon l'une quelconque des revendications 8 à 13, **caractérisée en ce que** l'axe de pivotement vertical (27) du troisième joint rotatif (11) s'étend parallèlement à l'axe de pivotement vertical (24) du sixième joint rotatif (14).

15. Tête de ligne selon l'une quelconque des revendications 1 à 14, **caractérisée en ce qu'**il est prévu sur la tête de ligne (01) un dispositif d'équilibrage (18) avec lequel au moins un segment de tube rigide (03, 04, 06, 07) et/ou au moins un joint rotatif (10, 12, 13) et/ou l'accouplement de ravitaillement (02) est maintenu en balance.

16. Tête de ligne selon la revendication 15, **caractérisée en ce que** le dispositif d'équilibrage (18) maintient en suspension le deuxième segment de tube rigide (04).

17. Tête de ligne selon l'une quelconque des revendications 15 ou 16, **caractérisée en ce que** le dispositif d'équilibrage (18) soutient le deuxième segment de tube rigide (04) par rapport au troisième segment de tube rigide (05).

18. Tête de ligne selon l'une quelconque des revendications 15 à 17, **caractérisée en ce que** le dispositif d'équilibrage (18) comporte un jeu de ressorts précontraints (19).

19. Tête de ligne selon la revendication 18, **caractérisée en ce que** la précontrainte du jeu de ressorts (19) est réglable.

20. Tête de ligne selon l'une quelconque des revendications 1 à 19, **caractérisée en ce que** le moyen d'entraînement à levier parallèle (15) est formé par le premier segment de tube rigide (03), le deuxième segment de tube rigide (04) et trois leviers de liaison (20, 21, 22), le premier levier de liaison (20) étant fixé rigidement au troisième segment de tube (05) dans une position orientée, en particulier verticalement, le deuxième levier de liaison (21) étant disposé parallèlement au deuxième segment de tube rigide (04), le troisième levier de liaison (22) étant fixé rigidement au premier segment de tube (03) et le deuxième levier de liaison (21) étant relié par articulation au premier levier de liaison (20) et au troisième levier de liaison (22).

21. Tête de ligne (01) selon l'une quelconque des revendications 1 à 20, **caractérisée en ce que** le quatrième joint rotatif (12) peut être placé directement au-dessus du sixième joint rotatif (14).

22. Tête de ligne (01) selon la revendication 21, **caractérisée en ce que** lorsque le quatrième joint rotatif (12) est placé au-dessus du sixième joint rotatif (14), l'axe de pivotement vertical (24) du quatrième joint rotatif (12) est aligné sur l'axe de pivotement vertical (29) du sixième joint rotatif (14).

23. Tête de ligne (01) selon l'une quelconque des revendications 1 à 22, **caractérisée en ce que** la distance horizontale entre l'axe de pivotement vertical (29) du sixième joint rotatif (14) et l'axe de pivotement vertical (27) du troisième joint rotatif (11) correspond sensiblement à la distance horizontale entre l'axe de pivotement vertical (24) du quatrième joint rotatif (12) et l'axe de pivotement vertical (27) du troisième joint rotatif (11).
